(19) Europäisches Patentamt
European Patent Office
Office européen des brevets

(11) **EP 2 239 612 A1**

(12) **EUROPÄISCHE PATENTANMELDUNG**

(43) Veröffentlichungstag:
**13.10.2010 Patentblatt 2010/41**

(51) Int Cl.:
***G02B 21/00*** *(2006.01)*   ***G02B 21/36*** *(2006.01)*
***G06T 5/50*** *(2006.01)*   ***H04N 5/00*** *(2006.01)*

(21) Anmeldenummer: **09100227.9**

(22) Anmeldetag: **06.04.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(71) Anmelder: **Carl Zeiss Surgical GmbH**
**73447 Oberkochen (DE)**

(72) Erfinder: **Meckes, Günter**
**81477, München (DE)**

(74) Vertreter: **Taresch, Gudrun**
**KanzleiTaresch**
**Maistrasse 63**
**80337 München (DE)**

(54) **Verfahren und Vorrichtung zum Extrahieren von Standbildern aus Bildaufnahmen eines Operationsmikroskops**

(57)   Die Erfindung betrifft ein Verfahren und eine Vorrichtung zum Extrahieren von Standbildern aus Bildaufnahmen eines Operationsmikroskops. Eine Kamera am Operationsmikroskop zeichnet zeit- und ortsversetzte Halbbilder aus geraden und ungeraden Bildzeilen auf. Diese werden an einer Recheneinrichtung zu einem Standbild kombiniert. Erfindungsgemäß werden zu kombinierende Werte der Bildpunkte zeitlich aufeinanderfolgender Halbbilder miteinander verglichen. Dabei werden Ähnlichkeitswerte abgeleitet und diese Ähnlichkeitswerte werden bei der Kombination der Halbbilder berücksichtigt. Dadurch können bewegte und unbewegte Bildbereiche erkannt und entsprechend behandelt werden, so dass Bewegungsartefakte in dem kombinierten Standbild eliminiert werden können.

Fig. 2

EP 2 239 612 A1

**Beschreibung**

Die Erfindung betrifft ein Verfahren zum Extrahieren von Standbildern aus Bildaufnahmen eines Operationsmikroskops nach dem Oberbegriff von Anspruch 1 und eine entsprechende Vorrichtung nach dem Oberbegriff von Anspruch 9.

Bei Operationen mit dem Operationsmikroskop werden heutzutage über den gesamten Operationsverlauf oder zumindest zeitweise Videoaufnahmen der Operation aufgezeichnet. Dabei wird der Beobachtungsstrahlengang des Mikroskops gewöhnlich über einen Strahlteiler in einen Strahlengang für das Okular, durch das der Operateur schaut, und einen Strahlengang für die Videokamera aufgeteilt. Die Aufnahmen können dann zeitgleich dem Chirurgen, seinen Assistenten oder anderen Personen im Operationssaal oder auch externen Beratern oder anderen Personen außerhalb des Operationssaales gezeigt werden. Oftmals werden diese Videoaufzeichnungen auch gespeichert und archiviert, so dass sie zu Studien herangezogen oder an andere behandelnde Ärzte oder sonstige berechtigte Personen übermittelt werden können. Viele dieser Videokameras haben auch eine Standbildoption, d.h. sie können Standbilder aufnehmen oder erzeugen.

Vorwiegend werden diese Videoaufzeichnungen gespeichert, um die wichtigsten Phasen der Operation zu dokumentieren. Um dabei auch Details festzuhalten ist es wichtig, dass die gespeicherten Bilder qualitativ hochwertig sind. Darüber hinaus werden diese Videoaufzeichnungen von Operationsmikroskopen auch an Computern ausgewertet, um daraus Größen abzuleiten, die dem Chirurgen oder Arzt Hilfestellungen bei der Diagnose und Behandlung zu geben. So werden im Bereich der Ophthalmologie beispielsweise bei Kataraktoperationen Hilfskreise oder andere Markierungen in die Operationsmikroskope eingeblendet, die dem Operateur einen Anhaltspunkt für die Schneidposition geben sollen. Hierzu muss die Position der Pupille oder der Iris des Auges bestimmt werden. Diese wird aus Standbildern, welche aus den Videoaufnahmen abgeleitet werden, mit Mitteln der Bildverarbeitung ermittelt und nachverfolgt. Auch im Bereich der Neurochirurgie gibt es Anwendungen, bei denen die Aufnahmen, welche am Operationsmikroskop aufgezeichnet werden, mit Mitteln der Bildverarbeitung ausgewertet und dabei für den Arzt relevante Größen wie z.B. die Durchflussrate des Blutes durch die Blutgefäße abgeleitet werden.

Für derartige quantitative Auswertungen über Bildverarbeitung ist jedoch eine möglichst hohe Bildauflösung notwendig. Hierfür ist die Qualität der Aufnahmen, welche am Operationsmikroskop bisher mit Standard-Videokameras aufgezeichnet wurden, oftmals nicht ausreichend.

Deshalb ist ein gängiges Verfahren, die an der Standard-Videokamera aufgenommenen zwei Halbbilder, bei denen jeweils die geraden und die ungeraden Zeilen zeitversetzt aufgenommen werden, zu addieren und daraus ein höher aufgelöstes Bild zu erstellen. Die, bei Operationen am Operationsmikroskop aufgenommenen Bilder enthalten jedoch oftmals sehr feine Details, die sich sehr schnell ändern, was bei der Addition von zu zwei verschiedenen Zeitpunkten aufgenommenen Halbbildern zu Artefakten im addierten Bild führt.

Eine weitere Möglichkeit bestünde darin, eine hochauflösende Videokamera zu verwenden. Hierzu müsste jedoch am Operationsmikroskop die gesamte Video-Hardware ausgetauscht werden. Darüber hinaus sind diese Kameras im Vergleich zu Standard-Kameras deutlich teurer.

Der Erfindung liegt die Aufgabe zugrunde, ein Verfahren und eine Vorrichtung zu realisieren, um aus den am Operationsmikroskop aufgezeichneten Videoaufnahmen Standbilder möglichst hoher Qualität und Auflösung kostengünstig bereitzustellen.

Gelöst wird die Aufgabe gemäß der Erfindung durch ein Verfahren zum Extrahieren von Standbildern aus Bildaufnahmen eines Operationsmikroskops nach Anspruch 1 und eine entsprechende Vorrichtung nach Anspruch 9.

Erfindungsgemäß wird aus den Bildaufnahmen eines Operationsmikroskops ein Standbild möglichst hoher Auflösung extrahiert, indem die Bildzeilen von mit einer Kamera aufgezeichneten Halbbildern miteinander kombiniert werden, wobei bei der Kombination die Werte von Bildpunkten zeitlich aufeinanderfolgender Halbbilder miteinander verglichen werden, bevor je ein Halbbild mit geraden mit einem mit ungeraden Bildzeilen kombiniert wird und bei der Kombination der Bildpunkte der Halbbilder bei dem Vergleich abgeleitete Ähnlichkeitswerte der einzelnen Halbbilder berücksichtigt werden. Dabei wird ein kombiniertes Bild erzeugt, dessen Anzahl an Bildpunkten der Summe der Anzahl der Bildpunkte der Halbbilder entspricht. Bisher wurden dabei für jede gerade Zeile des kombinierten Bildes eine Bildzeile des ersten Halbbildes genommen und für jede ungerade Zeile eine Zeile des zweiten Halbbildes. Wichen die Werte von nebeneinander zu liegen kommenden Bildpunkten der Halbbilder dabei aufgrund von Bewegung des Objektes zwischen den Bildaufnahmen voneinander ab, so ergaben sich Bewegungsartefakte. Deshalb wird erfindungsgemäß vorgeschlagen, das gängige Verfahren nur in den Bereichen des Bildes anzuwenden, in denen die Werte sich entsprechender Bildpunkte zeitlich aufeinanderfolgender Halbbilder gleicher Zeilen nicht voneinander abweichen, während in den Bereichen, in denen die Werte sich entsprechender Bildpunkte zeitlich aufeinanderfolgender Halbbilder gleicher Zeilen maximal voneinander abweichen, in denen sich also das Objekt zwischen zwei, sich räumlich entsprechenden Aufnahmen, bewegt hat, nur die Bildpunkte eines einzigen Halbbildes genommen werden, um die Zeilen des kombinierten Bildes aufzufüllen. Die Werte sich entsprechender Bildpunkte, die nicht identisch sind aber auch nicht maximal voneinander abweichen, also deren Werte sich in ihren Ähnlichkeitswert im Zwischenbereich befinden und somit stark oder weniger stark voneinander abweichen, werden jeweils nach dem einen oder anderen Verfahren oder vorzugsweise einer Kombination der beiden Verfahren behandelt. Wird innerhalb eines Bildes entweder nach dem einen oder dem anderen Verfahren gearbeitet, also anhand der Ähnlichkeitswerte festgelegt, nach welchem Verfahren die Halbbilder kombiniert werden, so wird ein Übergangsähnlichkeitswert festgelegt, bei dem der Übergang von einem Verfahren zum anderen stattfindet. Dieser Übergangswert kann empirisch festgelegt werden, er kann aber auch bildinhaltsabhängig bestimmt werden. Bei einer Modifikation des Verfahrens, bei dem immer eine Kombination der Bildpunkte zeitlich aufeinanderfolgender Halbbilder sattfindet, wobei jedoch mit einer Gewichtung mit dem Ähnlichkeitswert gearbeitet wird, so dass jeweils Werte der Bildpunkte beide Halbbilder gleichermaßen berücksichtig werden oder der Wert des Bildpunktes eines Halbbildes stärker gewichtet wird, muss kein Übergangswert festgelegt werden, es kann zu keinen Sprüngen im Bild kommen, welche bei der Auswahl zwischen zwei Verfahren immer riskiert werden. Letzteres Verfahren wird im Folgenden näher erläutert. Durch die Berücksichtigung des Ähnlichkeitswerts bei der Kombination der Werte der Bildpunkte aufeinanderfolgender Halbbilder kann, unabhängig davon, ob der Ähnlichkeitswert als Übergangsähnlichkeitswert zur Auswahl zwischen zwei Verfahren oder als Gewichtungsfaktor gewählt wird, gewährleistet werden, dass in den unbewegten Bildbereichen durch Kombination der Halbbilder die volle Auflösung erzielt werden kann, während in den bewegten Bildbereichen die Entstehung von Bewegungsartefakten vermieden wird. Damit kann ein Standbild maximaler Auflösung bei gleichzeitiger Vermeidung von Artefakten erzeugt werden. Dabei kann der Wert des Bildpunktes in Intensität, Dichte, Graustufe oder ähnlichen in der Bildverarbeitung bekannten Größen realisiert sein.

Bevorzugt werden beim Vergleich von Werten von Bildpunkten zeitlich aufeinanderfolgenden Halbbildern jeweils Werte von Bildpunkten von Halbbildern mit geraden Bildzeilen miteinander verglichen und zeitlich nachfolgend aufgenommene mit ungeraden Bildzeilen. Bei diesem Vergleich von räumlich identischen aber zeitlich versetzten Halbbildern ist davon auszugehen, dass die Werte sich entsprechender Bildpunkte jeweils identisch sind, solange das aufzunehmende Objekt sich nicht bewegt oder verändert. Das heißt der Ähnlichkeitswert zweier Bildpunkte ist ein Maß dafür, ob Bewegung bzw. Veränderung im Bild an dieser Stelle stattgefunden hat. Damit kann anhand des Ähnlichkeitswertes abgeleitet werden, ob dieser Bildpunkt mit in das kombinierte Bild aufgenommen werden soll oder nicht. Vorzugsweise können für den Vergleich die aus den Halbbildern zusammengefügten Einzel- oder Standbilder verwendet werden. Standard-Videokameras bzw. die Rechner im Operationsmikroskop liefern gewöhnlich Einzelbilder, welche aus jeweils zwei Halbbildern zusammengefügt sind. Diese zur Ableitung der Ähnlichkeitswerte direkt zu verwenden, ohne die Halbbilder vorab trennen zu müssen, ist die einfachste Lösung.

In einer weiteren vorteilhaften Ausführungsform werden die beiden Halbbilder auf die Größe des gewünschten Standbildes skaliert, bevor ihre Bildpunkte kombiniert werden. Dadurch ist bei der Kombination der Halbbilder eine eindeutige Zuordnung der Bildpunkte möglich. Jedes der Halbbilder hat an jedem Bildpunkt des Zielbildes einen Wert, so dass die Werte der Halbbilder an jedem Bildpunkt vorzugsweise gewichtet addiert werden können. Somit geht in jedem Bildpunkt des Ziel-Standbildes die Information beider Halbbilder ein, falls diese nicht durch Bewegung beeinträchtigt sind.

Vorzugsweise werden für alle Bildpunkte der Halbbilder beim Vergleich Ähnlichkeitswerte zumindest temporär im Datenspeicher abgespeichert. Über die Ähnlichkeitswerte kann gesteuert werden, dass bei der Kombination der Bildpunkte immer nur dann beide Werte der Bildpunkte vollständig berücksichtigt werden, wenn diese Werte sich sehr ähnlich sind, während bei völlig unterschiedlichen Werten der zu vergleichenden Bildpunkte immer nur der Wert eines Bildpunktes eines Halbbildes zum Tragen kommt. Vorzugsweise variieren die Werte der Ähnlichkeitswerte zwischen 0.0 und 1.0, so dass sich bei der Multiplikation von Ähnlichkeitswert und Wert des Bildpunktes entweder der Wert des Bildpunktes ergibt oder dieser verschwindet, so dass die Kombination mit dem Wert des Bildpunktes des anderen Halbbildes in einer einfachen Addition erfolgen kann und sich dabei das gewünschte Ergebnis zeigt.

In einer vorteilhaften Ausführungsform erfolgt die Kombination der Bildpunkte der Halbbilder zu einem optimierten Standbild (IMG) durch Multiplikation der Werte der Bildpunkte der Halbbilder (HA und HB) und der Werte eines der skalierten Halbbilder (HAS oder HBS) mit dem jeweiligen Ähnlichkeitsfaktor (F) gemäß der Vorschrift IMG=(Fx(HA+HB)+(1-F)xHAS). Durch diese einfache Kombination ist gewährleistet, dass das Standbild immer dann aus den Werten beider Halbbilder zusammengesetzt ist und damit hohe Auflösung hat, wenn die Ähnlichkeitsfaktoren bei Eins sind, also wenn aufeinanderfolgende Halbbilder identisch sind und immer dann nur die Werte eines Halbbildes berücksichtigt werden, wenn der Ähnlichkeitsfaktor bei Null liegt, wenn also die aufeinanderfolgenden Halbbilder gleicher Bildzeilen völlig verschieden sind. Die Halbbilder sind in dieser Vorschrift austauschbar. Vorteilhaft kann anstelle der Bildung der Summe der Halbbilder auch gleich das ursprünglich von der Kamera gelieferte Standbild, das die Halbbilder einfach zusammenfügt verwendet werden. Dadurch wird ein Rechenschritt gespart.

Weitere Einzelheiten und Vorteile der Erfindung ergeben sich aus den Unteransprüchen im Zusammenhang mit der Beschreibung eines Ausführungsbeispiels, das anhand der Zeichnungen eingehend erläutert wird.

Es zeigen:

Fig. 1          schematisch ein Operationsmikroskop zur Aufnahme und Auswertung medizinischer Bilddaten,

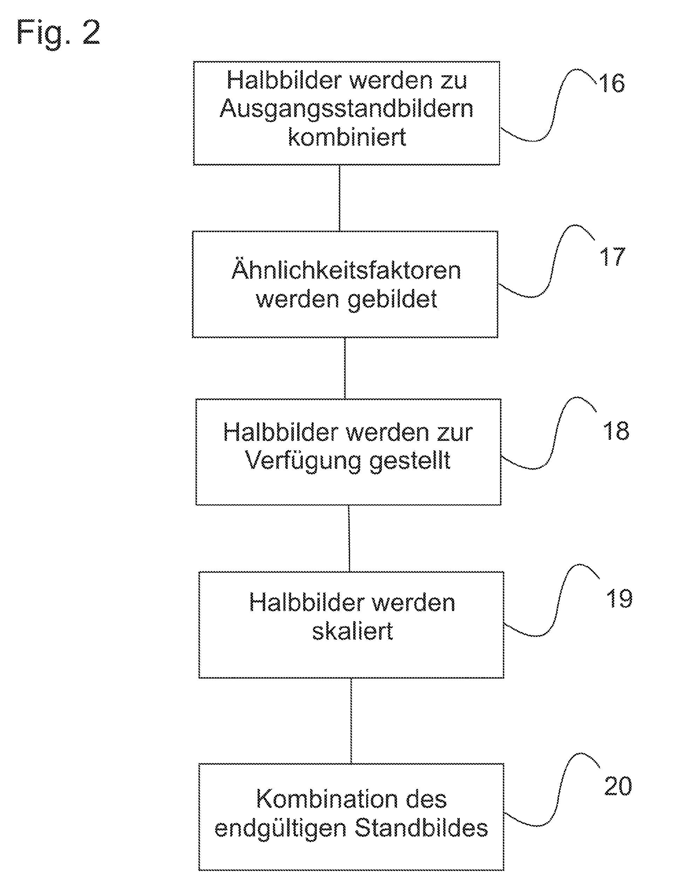

Fig. 2 ein Ablaufdiagramm mit den wesentlichen Schritten des erfindungsgemäßen Verfahrens,

Fig. 3a, b Ein Ablaufdiagramm mit den wesentlichen Schritten des erfindungsgemäßen Verfahrens,

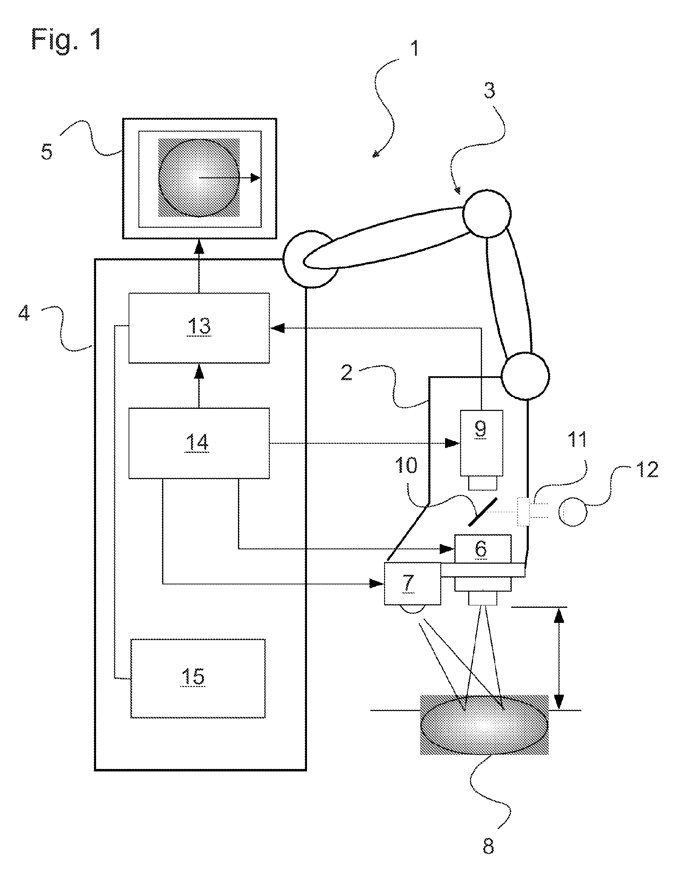

Die Fig. 1 zeigt schematisch die wesentlichen Bestandteile eines erfindungsgemäßen Operationsmikroskops 1, wie es in einem Operationssaal eines Krankenhauses verwendet wird. Bestandteile des Operationsmikroskops 1 sind der Mikroskopkopf 2, das Stativ 3, die Elektronik 4 und eine Anzeige 5. Das Kernstück des Operationsmikroskops 1, der Mikroskopkopf 2, umfasst eine Optik 6, welche ein von einer Lichtquelle 7 beleuchtetes Objekt 8, wie bspw. eine von Blutgefäßen durchzogene Geweberegion, auf eine Kamera 9 abbildet und einen Strahlteiler 10, der einen Teil des Beobachtungsstrahlengangs auf ein Okular 11 ausspiegelt, an der das Auge einer behandelnden Person 12 das Objekt 8 beobachten kann. Vor der Operation muss die behandelnde Person 12 den Mikroskopkopf 2 an die Behandlungsposition bewegen und diese unter Umständen im Lauf der Behandlung verändern. Hierzu dient das Stativ 3, über das der Mikroskopkopf 2 beweglich mit der Elektronik 4 verbunden ist. Die von der Kamera 9 aufgenommenen Bilddaten werden an eine Recheneinheit 13 gegeben, an der sie ausgewertet werden. Die bei der Auswertung abgeleiteten medizinischen Größen werden dann, evtl. zusammen mit dem aufgenommen Bild des Objektes 8, an der Anzeige 5 dargestellt. Die Anzeige 5 kann Bestandteil einer zentralen OP-Steuerung sein, sie kann aber auch Bestandteil des Operationsmikroskops 1 selbst sein. Eine Steuereinheit 14 steuert die Helligkeit der Lichtquelle 7 sowie Vergrößerungsfaktor und Blende der Optik 6 und den Verstärkungsfaktor der Kamera 9. Darüber hinaus zeichnet die Steuereinheit 14 Metadaten, wie Vergrößerungsfaktor, Verstärkungsfaktor, Blende, Aufnahmezeitpunkt, etc., auf und gibt diese an die Recheneinheit 13 weiter. Metadaten und Bilddaten werden an dem mit der Recheneinheit 13 verbundenen Datenspeicher 15 gespeichert oder zumindest zwischengespeichert. Für die Auswertung der Bilddaten werden oftmals Standbilder benötigt, welche gerade in der Ophthalmologie und Neurologie möglichst hochauflösend sein sollten, da in diesen Bereichen sehr feine Äderchen und Details relevant sind, welche sich im Lauf der Operation auch noch stark verändern. Diese Standbilder werden an der Recheneinheit 13 extrahiert.

Die Resultate der Auswertung werden dann evtl. zusammen mit den Bilddaten an der Anzeige 5 dargestellt.

Ein konkretes Beispiel für ein Verfahren, welches an einem in der Fig. 1 beschriebenen Geräten durchgeführt werden kann, ist die Bestimmung des Blutflusses anhand der aufgenommenen Bilddaten. Zur Bestimmung des Blutflusses wird in eine Gewebe- und/oder Adernregion jeweils ein Chromophor, wie z. B. Indocyaningrün appliziert. Dieser Fluoreszenzfarbstoff bzw. das von ihm abgegebene Infrarot-Signal wird dann bei seiner Verbreitung im Gewebe oder entlang der Adern mittels der Kamera 9 des Operationsmikroskops 1 im Infraroten beobachtet. Sobald der Fluoreszenzfarbstoff, bzw. das Blut das ihn enthält, an einem zu betrachtenden Objekt 8, wie bspw. einem Gefäßabschnitt, angekommen ist, steigt das Infrarotsignal und damit die Intensität des aufgenommenen Bildsignals stark an. Der Anstieg der Intensität bzw. Helligkeit in diesem Gefäßabschnitt gibt Aufschluss über den Blutfluss an diesem Ort. Zur quantitativen Bestimmung des Blutflusses wird deshalb in dem gesamten aufzunehmenden Objekt 8 die Veränderung der Helligkeit über die Zeit betrachtet und in Form von Helligkeitskurven an möglichst vielen der aufgenommenen Bildpunkte festgehalten.

Das erfindungsgemäße Verfahren ist jedoch nicht darauf beschränkt. Es ist prinzipiell bei der Auswertung aller mit einem Operationsmikroskop 1 aufgenommenen medizinischen Bilddaten besonders vorteilhaft einsetzbar, bei der entweder ortsabhängige Größen von Objekten 8 abgeleitet werden oder deren Erscheinungsbild sich über die Zeit ändert. Beispiele sind Messungen an pulsierenden Blutgefäßen oder am Herzen, Messungen an Lungenbläschen, an akkommodierenden Pupillen, usw. Aber auch für statische Objekte ist das erfindungsgemäße Verfahren prinzipiell geeignet. Besonders geeignet ist das erfindungsgemäße Verfahren zur Aufbereitung von Standard-Videobildern, welche in wichtigen Phasen der Operation aufgenommen und zu Dokumentationszwecken gespeichert werden.

Im Falle der Bestimmung des Blutflusses geschieht die Aufnahme der Daten, wie bereits erwähnt, flächig durch eine Videokamera 9 im Infrarotbereich. Die aufgezeichneten Infrarot-Videos werden an den Datenspeicher 15 der Recheneinheit 13 übertragen und dort ab- oder zwischengespeichert. An der Recheneinheit 13 werden die für die Auswertung benötigten Standbilder abgeleitet. Hierzu werden die, an der Kamera aufgezeichneten Halbbilder gerader und ungerader Bildzeilen in einem ersten Kombinationsschritt 16 zu einem Ausgangsstandbild kombiniert gemäß des herkömmlichen Verfahrens kombiniert, indem jeweils die Bildpunkte des Halbbildes für die ungeraden Bildzeilen (HA) oder des Halbbildes (HB) für die geraden Bildzeilen, für die ungeraden oder geraden Bildzeilen des Ausgangsbildes (ASB) gewählt werden. Dies kann direkt an der Kamera 9 oder an der Recheneinheit 13 erfolgen. Anschließend werden die Bildpunkte zweier zeitlich aufeinanderfolgender Ausgangsstandbilder in einem Vergleichsschritt 17 verglichen. Dabei wird für jeden Bildpunkt ein Ähnlichkeitsfaktor als Maß der Ähnlichkeit der Werte der Bildpunkte abgeleitet. Bei identischen Werten wird dabei eine 1 als Ähnlichkeitsfaktor definiert, bei völlig unterschiedlichen eine Null, alle anderen Werte für Ähnlichkeitsfaktoren liegen dazwischen. Dabei ergibt sich gewissermaßen ein Bild aus Ähnlichkeitsfaktoren, also ein Ähnlichkeitsbild, welches im Datenspeicher 15 zumindest temporär abgespeichert wird. Zur weiteren Bearbeitung wird nun in einem Trennschritt 18 das Ausgangsstandbild in die beiden zu Grunde liegenden Halbbilder getrennt bzw. die Halbbilder von der Kamera direkt übernommen. Diese beiden Halbbilder werden in einem Erweiterungsschritt 19 auf die Größe des Ausgangsstandbildes skaliert. Hierbei wird ein geeignetes, hochwertiges Skalierungsverfahren verwendet. Die skalierten Halbbilder werden ebenfalls in dem Datenspeicher 15 zumindest temporär abgespeichert. Nach diesem Schritt liegen nunmehr am Datenspeicher 15 das Ausgangsstandbild (ASB), das Bild mit den Ähnlichkeitsfaktoren (F) und die zwei skalierten Halbbilder (HAS und HBS) vor, welche alle dieselbe Anzahl von Bildpunkten aufweisen. Diese vier Bilder bzw. mindestens jeweils drei davon werden nun in einem finalen Kombinationsschritt 20 zu einem optimierten Standbild (IMG) möglichst hoher Auflösung kombiniert. Dabei wird zum Kombinieren, also zum Bestimmen des Wertes eines Bildpunktes im optimierten Standbild (IMG) je nach Auswahl des zu ergänzenden Halbbildes eine der folgenden Vorschriften verwendet:

$$IMG(HAS) = F*ASB + (1.0-F)*HAS$$

$$IMG(HBS) = F*ASB + (1.0-F)*HBS$$

Wenigstens eines der beiden so erzeugten optimierten Standbilder wird in dem Datenspeicher 15 abgespeichert, damit es für spätere Auswertungen genutzt werden kann. Es wäre auch möglich, beide entstandenen Standbilder abzuspeichern

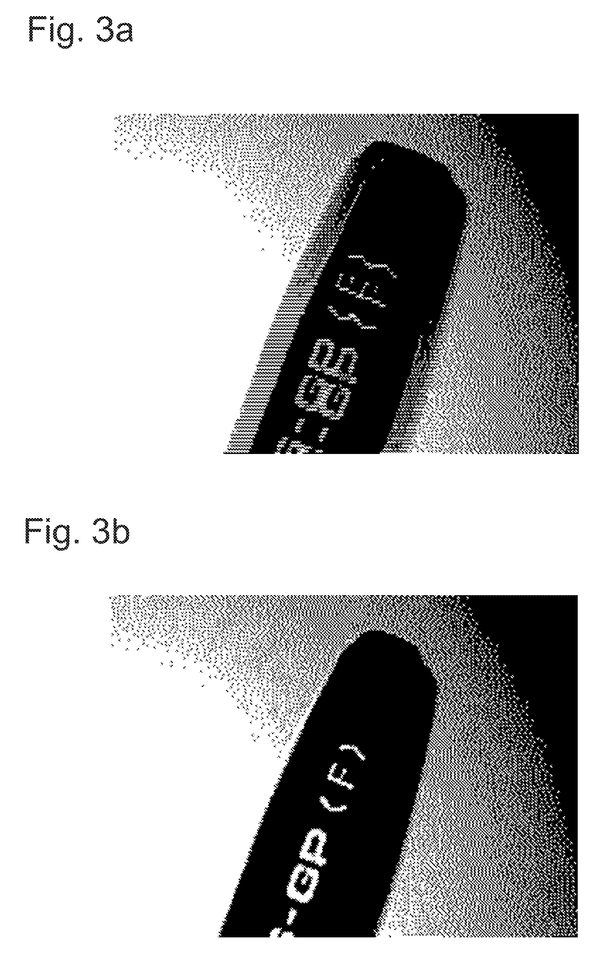

Die Fig. 3 zeigt anhand eines Vergleichs zwischen einem in der Fig. 3a gezeigten Standbild, das mit dem herkömmlichen Kombinationsverfahren erzeugt wurde und einem in der Fig. 3b gezeigten optimierten Standbild, welches gemäß dem erfindungsgemäßen Verfahren erzeugt wurde, die positiven Auswirkungen der Korrektur mit dem Ähnlichkeitsfaktor. Während in der in der Fig. 3a gezeigten aus einem Video extrahierten Standbildaufnahme einer Testaufnahme extreme Bewegungsartefakte auftreten, ist das in der Fig. 3b gezeigte optimierte Standbild in der Qualität zufriedenstellend. Die Artefakte sind verschwunden, die hohe Auflösung konnte in vielen Bereichen erhalten bleiben.

Bezugszeichenliste:

1    Operationsmikroskop
2    Mikroskopkopf
3    Stativ
4    Elektronik
5    Anzeige
6    Optik
7    Lichtquelle
8    Objekt
9    Kamera
10   Strahlteiler
11   Okular
12   Auge der behandelnden Person
13   Recheneinheit
14   Steuereinheit
15   Datenspeicher
16   Erster Kombinationsschritt
17   Vergleichsschritt
18   Trennschritt
19   Erweiterungsschritt
20   Finaler Kombinationsschritt

**Patentansprüche**

1.  Verfahren zum Extrahieren von Standbildern aus Bildaufnahmen eines Operationsmikroskops, wobei eine Kamera am Operationsmikroskop zeit- und ortsversetzte Halbbilder aus geraden und ungeraden Bildzeilen aufzeichnet und diese an einer Recheneinrichtung zu einem Standbild kombiniert werden, **dadurch gekennzeichnet, dass** zu kombinierende Werte der Bildpunkte zeitlich folgender Halbbilder miteinander verglichen werden, dabei Ähnlichkeitswerte abgeleitet und diese Ähnlichkeitswerte bei der Kombination der Halbbilder berücksichtigt werden.

2.  Verfahren zum Extrahieren von Standbildern aus Bildaufnahmen eines Operationsmikroskops nach Anspruch 1, **dadurch gekennzeichnet, dass** zur Ableitung der Ähnlichkeitswerte die Werte der Bildpunkte örtlich gleiche Halbbilder verglichen werden.

3.  Verfahren zum Extrahieren von Standbildern aus Bildaufnahmen eines Operationsmikroskops nach Anspruch 2, **dadurch gekennzeichnet, dass** zur Ableitung der Ähnlichkeitswerte die Werte der Bildpunkte von Halbbildern mit geraden Bildzeilen mit den Werten entsprechender Bildpunkte zeitlich folgender Halbbilder mit geraden Bildzeilen und die Werte von Bildpunkten von Halbbildern mit ungeraden Bildzeilen mit den Werten von entsprechenden Bildpunkten zeitlich folgenden Halbbildern mit ungeraden Bildzeilen verglichen werden.

4.  Verfahren zum Extrahieren von Standbildern aus Bildaufnahmen eines Operationsmikroskops nach Anspruch 3, **dadurch gekennzeichnet, dass** zur Ableitung der Ähnlichkeitswerte die Bildpunkte von zwei zeitlich aufeinanderfolgenden, aus zusammengesetzten Halbbildern gebildeten Standbildern miteinander verglichen werden.

5. Verfahren zum Extrahieren von Standbildern aus Bildaufnahmen eines Operationsmikroskops nach Anspruch 1, **dadurch gekennzeichnet, dass** die Halbbilder vor dem Kombinieren der Bildpunkte auf die Auflösung des kombinierten Bildes skaliert werden.

6. Verfahren zum Extrahieren von Standbildern aus Bildaufnahmen eines Operationsmikroskops nach Anspruch 1, **dadurch gekennzeichnet, dass** Ähnlichkeitsfaktoren der verglichenen Bildwerte für alle Bildpunkte gespeichert werden.

7. Verfahren zum Extrahieren von Standbildern aus Bildaufnahmen eines Operationsmikroskops nach Anspruch 6, **dadurch gekennzeichnet, dass** die Ähnlichkeitsfaktoren zwischen Null und Eins liegen.

8. Verfahren zum Extrahieren von Standbildern aus Bildaufnahmen eines Operationsmikroskops nach Anspruch 5 und 6, **dadurch gekennzeichnet, dass** die Kombination der Bildpunkte des Standbildes (IMG) durch Multiplikation der Werte der Bildpunkte der Halbbilder (HA und HB) und der Werte eines der skalierten Halbbilder (HAS oder HBS) mit dem jeweiligen Ähnlichkeitsfaktor (F) gemäß der Vorschrift

$$IMG=(Fx(HA+HB)+(1-F)xHAS),$$

erfolgt.

9. Vorrichtung zum Extrahieren von Standbildern aus Bildaufnahmen eines Operationsmikroskops, welches mit einer Kamera verbunden ist, wobei die Kamera am Operationsmikroskop zeit- und ortsversetzte Halbbilder aus geraden und ungeraden Bildzeilen aufzeichnet, mit:

    - einer Recheneinrichtung zum Kombinieren der Halbbilder zu einem Standbild,

**dadurch gekennzeichnet, dass**

    - die Recheneinheit so ausgebildet ist, dass sie auf zeitlich aufeinanderfolgende Halbbilder zugreifen kann und Werte der Bildpunkte der Halbbilder, welche zu kombinieren sind, miteinander vergleichen kann, um dabei Ähnlichkeitswerte abzuleiten und diese Ähnlichkeitswerte bei der Kombination der Halbbilder zu berücksichtigen.

10. Computerprogramm zur Durchführung des Verfahrens zum Extrahieren von Standbildern aus Bildaufnahmen eines Operationsmikroskops nach einem der Ansprüche 1 bis 8.

Fig. 1

## Fig. 2

| | |
|---|---|
| Halbbilder werden zu Ausgangsstandbildern kombiniert | 16 |
| Ähnlichkeitsfaktoren werden gebildet | 17 |
| Halbbilder werden zur Verfügung gestellt | 18 |
| Halbbilder werden skaliert | 19 |
| Kombination des endgültigen Standbildes | 20 |

## Fig. 3a

## Fig. 3b

**Europäisches Patentamt**
**European Patent Office**
**Office européen des brevets**

# EUROPÄISCHER RECHERCHENBERICHT

**Nummer der Anmeldung**

EP 09 10 0227

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 4 845 557 A (LANG STUART E [US]) 4. Juli 1989 (1989-07-04) | 1-8 | INV. G02B21/00 |
| X | * Abbildung 2(g) * | 9,10 | G02B21/36 G06T5/50 |
| | ----- | | H04N5/00 |
| Y | EP 0 483 957 A (IBM [US]) 6. Mai 1992 (1992-05-06) | 1-8 | |
| X | * Spalte 7, Zeile 13 - Zeile 25 * | 9,10 | |
| | ----- | | |
| Y | US 5 966 466 A (MIURA TSUYOSHI [JP]) 12. Oktober 1999 (1999-10-12) | 1-8 | |
| X | * Abbildung 2 * | 9,10 | |
| | ----- | | |
| Y | US 2007/098237 A1 (YOO BEN [US] ET AL YOO BEN [US] ET AL) 3. Mai 2007 (2007-05-03) * Absatz [0005] * | 1-8 | |
| | ----- | | |

| | RECHERCHIERTE SACHGEBIETE (IPC) |
|---|---|
| | G02B G06F G06T H04N |

Der vorliegende Recherchenbericht wurde für alle Patentansprüche erstellt

| Recherchenort | Abschlußdatum der Recherche | Prüfer |
|---|---|---|
| Den Haag | 24. September 2009 | Quertemont, Eric |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 10 0227

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-09-2009

| Im Recherchenbericht angeführtes Patentdokument | | Datum der Veröffentlichung | Mitglied(er) der Patentfamilie | | Datum der Veröffentlichung |
|---|---|---|---|---|---|
| US 4845557 | A | 04-07-1989 | JP | 1318376 A | 22-12-1989 |
| | | | JP | 2520301 B2 | 31-07-1996 |
| EP 0483957 | A | 06-05-1992 | CZ | 284194 B6 | 16-09-1998 |
| | | | DE | 69120499 D1 | 01-08-1996 |
| | | | DE | 69120499 T2 | 23-01-1997 |
| | | | WO | 9208316 A1 | 14-05-1992 |
| | | | HU | 64663 A2 | 28-01-1994 |
| | | | HU | 223699 B1 | 28-12-2004 |
| | | | IE | 913805 A1 | 22-05-1992 |
| | | | IL | 99743 A | 08-12-1995 |
| | | | JP | 2946871 B2 | 06-09-1999 |
| | | | JP | 7038834 A | 07-02-1995 |
| | | | PL | 167349 B1 | 31-08-1995 |
| | | | RU | 2113770 C1 | 20-06-1998 |
| | | | SG | 43723 A1 | 14-11-1997 |
| | | | SK | 42793 A3 | 07-07-1993 |
| | | | US | 5191413 A | 02-03-1993 |
| | | | ZA | 9108467 A | 29-07-1992 |
| US 5966466 | A | 12-10-1999 | JP | 10262244 A | 29-09-1998 |
| US 2007098237 | A1 | 03-05-2007 | CN | 101366046 A | 11-02-2009 |
| | | | EP | 1955255 A2 | 13-08-2008 |
| | | | JP | 2009513304 T | 02-04-2009 |
| | | | KR | 20080080291 A | 03-09-2008 |
| | | | US | 2009041317 A1 | 12-02-2009 |
| | | | WO | 2007053541 A2 | 10-05-2007 |

EPO FORM P0461

Für nähere Einzelheiten zu diesem Anhang : siehe Amtsblatt des Europäischen Patentamts, Nr.12/82